# EUROPEAN PATENT SPECIFICATION

(11) **EP 2 778 927 B1**
(45) Date of publication and mention of the grant of the patent: **22.02.2017**
(21) Application number: 14000927.5
(22) Date of filing: 13.03.2014
(51) Int. Cl.: G06F 11/22

(54) **VOICE BASED AUTOMATION TESTING FOR HANDS FREE MODULE**
SPRACHBASIERTE AUTOMATISIERUNGSPRÜFUNG FÜR FREISPRECHMODUL
AUTOMATISATION D'ESSAIS À BASE VOCALE POUR MODULE MAINS LIBRES

(30) Priority: 14.03.2013 IN CH10802013; 14.03.2013 US 201313829677
(43) Date of publication of application: 17.09.2014
(73) Proprietor: Accenture Global Services Limited, Dublin 4 (IE)
(72) Inventor: Rajagopal, Vidya, 560076 Karnataka (IN); Naidu, Divya Kilari Chandrababu, 560036 Karnataka (IN); Grace, Marin, 560102 Karnataka (IN)
(74) Representative: Müller-Boré & Partner Patentanwälte PartG mbB

(56) References cited:
- WO-A2-2005/070092
- US-A1- 2003 187 639

## Description

### Technical Field

This disclosure relates to voice based testing of an electronic control unit (ECU). In particular, this disclosure relates to voice-based testing of electronic equipment, such as hands-free systems in motor vehicles.

### Related Art

Hands-free systems, for example, voice based systems, may respond to audible commands and perform specified actions without manual or touch control by a user. Some hands-free systems may work with one or more other devices to complete an action such as making a phone call, changing a radio station, interacting with a navigation system or interacting with other telematics services. In some systems, a hands-free module may communicate with another device via a communications bus, such as a control area network (CAN) bus. For example, a hands-free module installed in a vehicle may respond to a user's voice command to change a radio station and may transmit a message over a control area network to a radio and/or a display screen to change the station. In another example, a hands-free module may respond to a user's voice command, such as "call Smith." The hands-free module may communicate via Bluetooth technology or another wireless or wired technology, with a mobile phone to initiate a phone call. While the phone is being controlled by the hands-free module, a microphone, speaker and/or display unit of the hands-free module may function in place of such interfaces of the mobile phone. In instances when the hands-free module is installed in an automobile, the microphone may be located in a rear view mirror, or the display and speaker unit may be installed in a dashboard, for example. Other controls may also interact with the hands-free module, for example, manual controls in a steering wheel or associated with a display unit may be utilized to activate the hands-free module. As voice based systems become more sophisticated and numerous, improved automated testing techniques are desirable.

Document WO 2005/070092 A2 discloses a method and a system for testing a voice enabled application on a target device, the method including conducting one or more interactions with the target device, at least some of the interactions including presenting an acoustic utterance in an acoustic environment to the target device, receiving an output of the target device in response to the acoustic utterance, and comparing the output to an output expected from the acoustic utterance.

Document US 2003/0187639 A1 discloses a method and system for evaluating telephone services provided by speech recognition which interfaces an evaluation engine with a voice recognition service over a telephone system to submit speech utterance samples to the voice recognition service, receive the response of the voice recognition service to the sample utterances, and determine error and recognition of the sample utterances by the voice recognition service by comparing actual voice recognition service responses to expected responses. The evaluation engine permits evaluation of a voice recognition service for plural glossaries in different contexts, such as through predetermined nodes of a voice recognition service menu having plural glossaries.

### SUMMARY

One aspect of the present invention is a method as defined in independent claim 1. Another aspect of the invention is an apparatus as defined in independent claim 8. Further embodiments of the invention are specified in the respective appended dependent claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 is a representative block diagram of a control area network bus and a plurality of electronic control units communicatively coupled by the control area network bus.
Figure 2 is a representative block diagram of one embodiment of an electronic control unit which may communicate via a control area network.
Figure 3 is a representative diagram of one embodiment of a test set-up for automated testing of an electronic control unit with a control area network connection.
Figure 4 is a representative block diagram of one embodiment of a test computer that hosts a voice based automated testing tool.
Figure 5 is a flow chart representing exemplary steps for testing a hands-free voice module using a voice based automated testing tool

### DETAILED DESCRIPTION OF THE PREFERRED EMBODIMENTS

An automated test solution may communicate with an electronic control unit (ECU) and instruct the ECU to perform one or more actions in order to perform a test of the ECU. Responses to the instructions may include communication by the ECU over a control area network (CAN) bus. The responses may be logged by the automated test system and the system may determine success or failure of the test. In some systems, input to the automated test solution may be provided by an Excel spreadsheet which may be read by the automated test solution. Test results may be provided by the automated test solution in an Excel spread sheet.

In a first aspect, one embodiment of the invention is a method for testing a hands-free device by an automated testing tool hosted by a first device. Test input may be read from text in an input file and utilized for testing operations of a hands-free second device. The hands-free second device may be communicatively coupled to a control area network (CAN) bus. One or more simulated audible voice commands may be generated for testing operations of the hands-free second device, based on the read test input. The automated testing tool may read information from the CAN bus. The CAN bus information may correspond to the operations of the hands-free second device which may be responsive to the generated simulated audible voice commands. The automated testing tool may output text in an output file comprising one or both of verdict information corresponding to testing the operations of the hands-free second device and all or a portion of the information received from the CAN bus. The text in the test input file may indicate the one or more simulated audible voice commands and one or more expected responses by the hands-free second device. One or more simulated audible voice commands for the testing operations of the hands-free second device may be generated by the automated testing tool based on text to speech logic and may comprise one or more of a specified language, pronunciation, regional accent, volume, pitch and speed. The automated testing tool may compare expected responses from the text in the read test input file to the information received from the CAN bus to determine the verdict information. Furthermore, the first device and the second device may be communicatively coupled via a first mobile phone and a second mobile phone. The automated testing tool may be operable to receive the information from the CAN bus corresponding to a call initiated in the first mobile phone to the second mobile phone by the generated one or more simulated audible voice commands, or a call initiated automatically by the automated testing tool in the second mobile phone to the first mobile phone based on the read test input. Generating one or more simulated audible voice commands may comprise transmitting the simulated audible voice commands from the first device via a speaker positioned to be sensed by a microphone communicatively coupled to the hands-free second device. The hands-free second device may comprise an electronic control unit (ECU) for a vehicle. The operations of the hands-free second device may include communicating messages onto a CAN bus for communication to a display unit, after one or more of receiving an audible voice command via an audio port, reorganizing the voice command and comparing the voice command to a programmed voice grammar. Moreover, the hands-free second device may communicate messages onto the CAN bus for communication to the display unit after receiving one or more of a command via a wireless interface, a command via an optical interface, and a command via a wire line interface. The first device and the hands free second device may be communicatively coupled by a control area network (CAN) message processor. The automated testing tool may be operable to, one or both of, enable audible voice command operations in the hands-free second device by transmitting a command to the hands-free second device via the CAN message processor, and receive the CAN bus information from the hands-free second device via the CAN message processor.

In a second aspect, another embodiment of the invention is a system for testing a hands-free device. The system may comprise one or more circuits or processors in a first device. The one or more circuits or processors may be operable to read test input from text in an input file for testing operations of a hands-free second device. The hands-free second device may be communicatively coupled to a control area network (CAN) bus. One or more simulated audible voice commands may be generated for testing operations of the hands-free second device based on the read test input. The automated testing tool may read information from the CAN bus. The CAN bus information may correspond to the operations of the hands-free second device which may be responsive to the generated simulated audible voice commands. The automated testing tool may output text in an output file comprising one or both of verdict information corresponding to testing the operations of the hands-free second device and all or a portion of the information received from the CAN bus. The text in the test input file may indicate the one or more simulated audible voice commands and one or more expected responses by the hands-free second device. One or more simulated audible voice commands for the testing operations of the hands-free second device may be generated by the automated testing tool based on text to speech logic and may comprise one or more of a specified language, pronunciation, regional accent, volume, pitch and speed. The automated testing tool may compare expected responses from the text in the read test input file to the information received from the CAN bus to determine the verdict information. Furthermore, the first device and the second device may be communicatively coupled via a first mobile phone and a second mobile phone. The automated testing tool may be operable to receive the information from the CAN bus corresponding to a call initiated in the first mobile phone to the second mobile phone by the generated one or more simulated audible voice commands, or a call initiated automatically by the automated testing tool in the second mobile phone to the first mobile phone based on the read test input. Generating one or more simulated audible voice commands may comprise transmitting the simulated audible voice commands from the first device via a speaker positioned to be sensed by a microphone communicatively coupled to the hands-free second device. The hands-free second device may comprise an electronic control unit (ECU) for a vehicle. The operations of the hands-free second device may include communicating messages onto a CAN bus after one or more of_receiving an audible voice command via an audio port, reorganizing the voice command and comparing the voice command to a programmed voice grammar. Moreover, the hands-free second device may communicate messages onto the CAN bus after receiving one or more of a command via a wireless interface, a command via an optical interface, and a command via a wire line interface. The first device and the hands free second device may be communicatively coupled by a control area network (CAN) message processor. The automated testing tool may be operable to, one or both of, enable audible voice command operations in the hands-free second device by transmitting a command to the hands-free second device via the CAN message processor, and receive the CAN bus information from the hands-free second device via the CAN message processor.

In a third aspect, still another embodiment of the invention is a non-transitory computer readable medium having stored thereon one or more instructions for testing a hands-free device. The one or more instructions may be executable by one or more processors to cause the one or more processors to perform steps comprising, in an automated testing tool hosted by a first device, reading test input from text in an input file for testing operations of a hands-free second device. The hands-free second device may be communicatively coupled to a control area network (CAN) bus. One or more simulated audible voice commands may be generated for testing operations of the hands-free second device, based on the read test input. The automated testing tool may read information from the CAN bus. The CAN bus information may correspond to the operations of the hands-free second device which may be responsive to the generated simulated audible voice commands. The automated testing tool may output text in an output file comprising one or both of verdict information corresponding to testing the operations of the hands-free second device and all or a portion of the information received from the CAN bus. The text in the test input file may indicate the one or more simulated audible voice commands and one or more expected responses by the hands-free second device. One or more simulated audible voice commands for the testing operations of the hands-free second device may be generated by the automated testing tool based on text to speech logic and may comprise one or more of a specified language, pronunciation, regional accent, volume, pitch and speed. The automated testing tool may compare expected responses from the text in the read test input file to the information received from the CAN bus to determine the verdict information. Furthermore, the first device and the second device may be communicatively coupled via a first mobile phone and a second mobile phone. The automated testing tool may be operable to receive the information from the CAN bus corresponding to a call initiated in the first mobile phone to the second mobile phone by the generated one or more simulated audible voice commands, or a call initiated automatically by the automated testing tool in the second mobile phone to the first mobile phone based on the read test input. Generating one or more simulated audible voice commands may comprise transmitting the simulated audible voice commands from the first device via a speaker positioned to be sensed by a microphone communicatively coupled to the hands-free second device. The hands-free second device may comprise an electronic control unit (ECU) for a vehicle. The operations of the hands-free second device may include communicating messages onto a CAN bus after one or more of receiving an audible voice command via an audio port, reorganizing the voice command and comparing the voice command to a programmed voice grammar. Moreover, the hands-free second device may communicate messages onto the CAN bus after receiving one or more of a command via a wireless interface, a command via an optical interface, and a command via a wire line interface. The first device and the hands free second device may be communicatively coupled by a control area network (CAN) message processor. The automated testing tool may be operable to, one or both of, enable audible voice command operations in the hands-free second device by transmitting a command to the hands-free second device via the CAN message processor, and receive the CAN bus information from the hands-free second device via the CAN message processor.

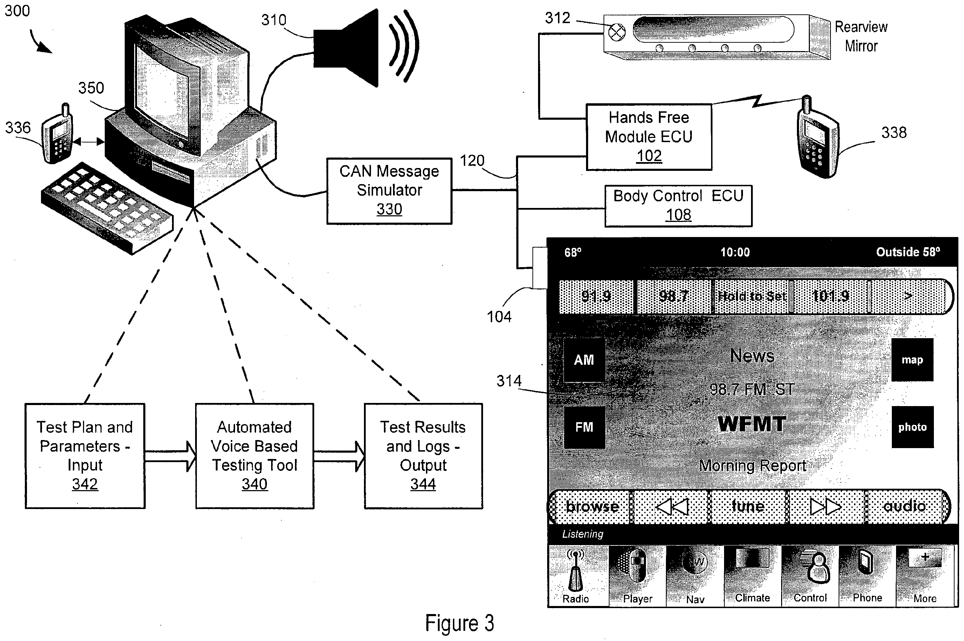

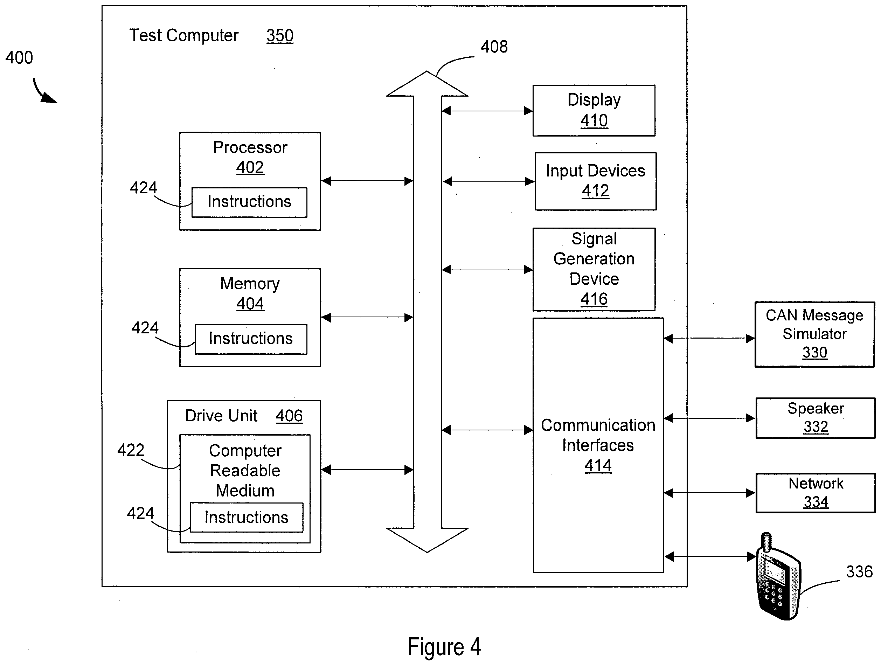

According to any of the aspects described above, the first device may be implemented as a test computer, e.g. the test computer 350 described in connection with Figures 3 and 4. Moreover, the automated testing tool may be implemented as the automated test tool 340.

In some cases, the hands-free second device may be implemented as an ECU, e.g. the ECU 102 described below.

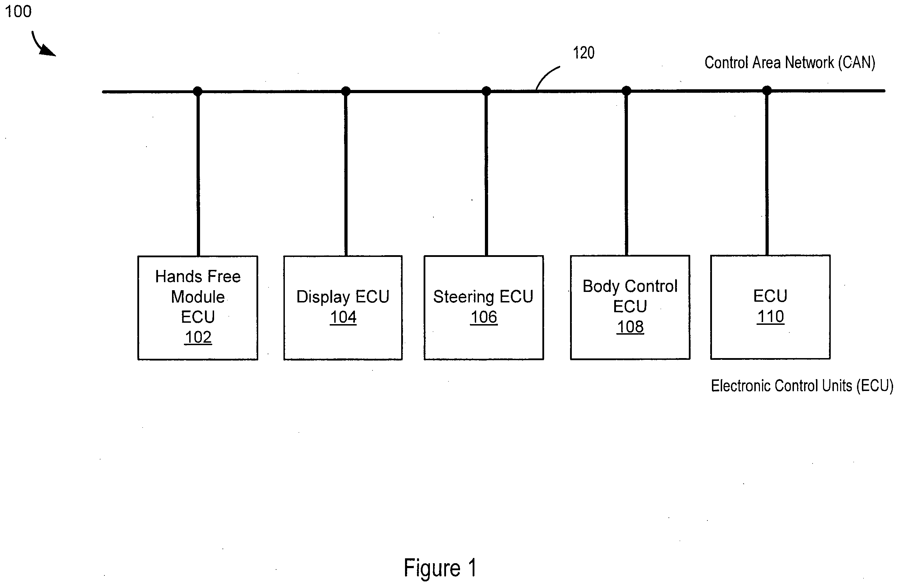

Now, turning to the figures, Figure 1 is a representative block diagram of a control area network bus and a plurality of electronic control units communicatively coupled by the control area network bus. Referring to Figure 1, there is shown a system 100 comprising a control area network (CAN) bus 120 and a plurality of exemplary electronic control units (ECU) including a hands-free module ECU 102, a display ECU 104, a steering ECU 106, a body control ECU 108 and an ECU 110. The ECUs shown in Figure 1 may be referred to as the ECU devices 102, 104, 106, 108 and 110. Moreover, the ECUs shown in Figure 1 may be referred to as nodes, modules, units or embedded systems, for example.

In the context of the present application, an "embedded system" may be understood as a computer system or a device designed to perform one or a few dedicated functions. The embedded system can be contrasted with a general purpose computer system, e.g. a desktop PC. As mentioned below, the embedded system may include a microcontroller or a digital signal processor.

The CAN bus 120 may enable the ECU devices 102, 104, 106, 108 and 110 to communicate with each other using a CAN bus message based protocol. In some systems, the CAN bus 120 may utilize a multi-master broadcast serial bus standard for communication among the ECUs. The CAN bus 120 may be utilized in automotive systems, aerospace, industrial automation and medical equipment, for example. One or more CAN standards may be applied to the CAN bus 120, including standards from the Society of Automotive Engineers (SAE) and the international standards organization (ISO). For example, one or more versions or variations of the ISO 11898 standards for serial communication may be utilized. Moreover, CAN bus 120 standards may be utilized in on board diagnostics standards such as OBD-II.

The ECU devices 102, 104, 106, 108 and 110 may comprise embedded systems that control one or more electrical systems or subsystems in a motor vehicle or another type of equipment. For example, the display ECU 104 may control a display screen and/or a corresponding control unit in a vehicular sub-system. The steering ECU 106 may control components in a steering subsystem which may support steering a vehicle and/or other types of controls that may be installed in a steering wheel. The body control ECU 108 may control an air conditioner, wipers, washers, windows, lights, horn, or other sensor and/or control subsystems, for example. Many other types of ECUs (not shown) that may be connected to the CAN bus 120 may include, for example, one or more of an electronic or engine control module (ECM), a powertrain control module (PCM), a transmission control module (TCM), a brake control module (BCM or EBCM), central control module (CCM), central timing module (CTM), general electronic module (GEM), suspension control module (SCM). Some motor vehicles may have on the order of eighty ECUs.

In operation, each of the nodes on the CAN bus 120, including the ECU devices 102, 104, 106, 108 and 110, may be operable to send and/or receive CAN messages serially onto the bus. The messages may each include an identifier. The messages may be sensed by all nodes on the CAN bus 120. In instances when a message is relevant to a node, the node may process the message. In some systems, the CAN bus 120 may utilize a priority based arbitration.

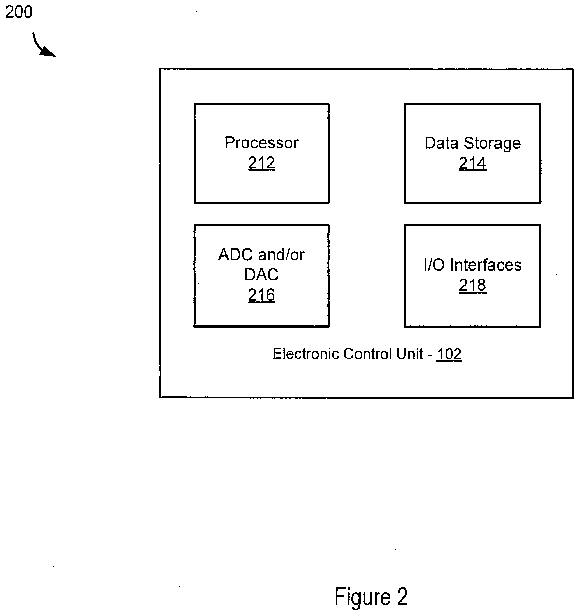

Figure 2 is a representative block diagram of an electronic control unit which may communicate via a control area network. Referring to Figure 2, the system 200 may comprise the electronic control unit (ECU) 102. The ECU 102 may comprise a processor 212, a memory 214, input and/or output (I/O) interfaces 218 and analog to digital converter and/or a digital to analog converter (ADC/DAC) units 216.

The ECU 102 may be a hands-free module and may be configured to be communicatively coupled to a control area network as described with respect to Figure 1. The ECU 102 may be an embedded system that may control functions and/or devices of a larger system such as an in-vehicle system or other systems communicatively coupled to a CAN bus. The processor 212 may include one or more processors and may comprise, for example, a microcontroller or digital signal processor. The ECU 102 may be operable to perform analog to digital conversion and/or digital to analog conversion in the ADC/DAC units 216. In some exemplary systems, one or more of the processor 212, the memory 214, the I/O interfaces 218 and/or the ADC/DAC units 216 may include separate integrated circuits. In other exemplary systems, a microcontroller on an integrated circuit in the ECU 102 may include one or more of the processor 212, memory 214, and one or more peripherals such as the I/O interfaces 218 and ADC/DAC units 216. The memory 214 may include RAM and/or ROM memory. The I/O interfaces 218 may include a serial connection to the CAN bus 120, wireless network interfaces, wired network interfaces and in some systems, may include separate audio and/or display interfaces.

In operation, the ECU 102 may comprise a hands-free module that may be operable to communicate via the CAN bus 120 with other ECUs in a vehicle. For example, the hands-free ECU 102 may control, or operate as part of, one or more information and/or entertainment systems in the vehicle. The ECU 102 may accept audible voice commands from a user via a microphone and an audio-in port in the I/O interfaces 218. The ECU 102 may process and/or reorganize the voice command and may compare it against a programmed voice command grammar. The ECU 102 may initiate or control functions of the hands-free module or of other systems or subsystems that are part of the vehicle system or communicatively coupled to a system within the vehicle based on the command. Exemplary systems or subsystems may include a radio, a navigation system, a mobile phone, an emergency warning system, wireless safety communication, automatic driving assistance or other telematics. One or more of the systems or subsystems may have a corresponding display screen that may provide information and/or may provide a menu or indicate a choice of actions that a user may control with a voice command via the hands-free ECU 102. For example, a radio screen 314 (shown in Figure 3) may indicate a station or programming that is being received and station choices that a user may select with a voice command.

The hands-free ECU 102 may be communicatively coupled via the I/O interfaces 218, to, for example, a display screen, a microphone system, a speaker system or other types of sensors. In instances when the hands-free ECU 102 receives a voice command, the ECU may perform voice reorganization of the voice data and may process the command against a configured list of voice commands. The command may correspond to (e.g. trigger) an action to be taken or activation of a system. The ECU 102 may communicate via the interface 218 on the CAN bus 120, based on the received command. The action to be taken may initiate a change in a display screen and the ECU 102 may transmit a message via the CAN bus 120 that corresponds to (e.g. indicates or announces) the change in display screen. For example, a radio station may be actively playing over a speaker system in the vehicle and a display screen in the vehicle may provide radio station and/or programming information (shown in Figure 3). The ECU 102 may receive a voice command such as "navigation" or "map" and may communicate via the CAN bus 120 indicating a change in display, from the radio screen to a navigation screen. Similarly, the hands-free module 102 may be communicatively coupled with a mobile phone, for example, via a wireless connection such as Bluetooth connection in the I/O interfaces 218. A user may be listening to the radio and may give a voice command to make a phone call. The ECU 102 may communicate via the CAN bus 120 indicating that a display screen in the vehicle may change to a mobile phone screen and/or corresponding command menus. In another embodiment, the hands free module 102 may communicate with other systems via the CAN bus 120, for example, air conditioning, wiper or light systems. In this regard, the hands-free module 102 may receive an audible voice command for turning-on or adjusting the air conditioning. The hands-free module 102 may process the command and send a message to the display via the CAN bus 120 to change the display with respect to air conditioning controls. Moreover, the hands-free module 102 may send a message to the body control ECU 108 via the CAN bus 120 to activate or adjust the air conditioning in accordance with the voice command.

Figure 3 is a representative diagram of one embodiment of a test set-up for automated testing of a hands free device. In particular, Figure 3 shows a test set-up for automated testing of an electronic control unit with a control area network connection.

Referring to Figure 3, a testing system 300 may include a test computer 350, a CAN message simulator 330, a test mobile phone 336, a speaker 310, a microphone 312, a mobile phone 338, and a display screen 314. Also shown are the hands-free ECU 102, the display ECU 104, the body control ECU 108 and a CAN bus 120, which are described with respect to Figures 1 and 2. In addition, software including an automated test tool 340 (also referred to as an automated testing tool or automated voice based testing tool) is represented with a test plan and test parameter input 342 and a test result and log output 344.

The testing system 300 may be communicatively coupled with a hands-free ECU 102 and a CAN bus 120 which are described with respect to Figures 1 and 2. The hands-free ECU 102 and the CAN bus 120 may be tested outside of a vehicular system, for example, in a lab environment or a manufacturing test environment. The hands-free ECU 102 may be tested to ensure that it activates properly and responds correctly to voice commands. The voice commands may be issued to the hands-free ECU 102 in a variety of languages and accents. Also, volume and speed may vary in delivery of the voice commands during the testing procedure.

Simulated voice commands may be communicated (e.g. transmitted) to the hands-free ECU 102 via a microphone 312. In a vehicular system, the microphone 312 may be installed in any suitable location such that a user may enter voice commands for the hands-free module ECU 102 system. For example, the microphone 312 may be installed in a rearview mirror, a dashboard unit or a steering wheel unit. The microphone 312 may be connected to the ECU 102 via an audio port to deliver audio signals including the voice commands.

The hands-free ECU 102 may be attached to the CAN bus 120 and may communicate with the display ECU 104 via the CAN bus 120. For example, the hands-free ECU 102 may receive voice commands to perform a specified action such as change a radio station, activate a navigation system, find a driving route or make a phone call, and as a result, the hands-free ECU 102 may communicate via the CAN bus to the display ECU 104 to change the image presented on the display screen 314. In instances when the display screen 314 is changed, the display ECU 104 may communicate screen ID changes to the hands-free ECU 102 via the CAN bus 120 to indicate which screen is being displayed. The screen ID changes communicated from the display ECU 104 to the hands-free ECU 102 may be logged by the automated testing tool 340 to determine whether the hands-free ECU is functioning correctly. The voice command may also trigger a change in the source of information communicated to the display screen 314. For example, the source may be a radio, a navigation system, a mobile phone, various telematics or any suitable device or system communicatively coupled to the hands free system and display 314. In instances when the hands-free ECU 102 does not recognize a voice command, it may inform the display ECU 104 so that the display 314 may indicate to a user that the voice command was not recognized.

In some systems, the hands-free module ECU 102 may be wired to the display unit 314 via VGA and/or LVDS wiring. An audio output port of the hands-free ECU 102 may be coupled to an audio input and/or external speakers of the display 314. Moreover, the ECU 102 may share a power supply with the display 314.

The test computer 350 and the hands free ECU 102 may be communicatively coupled via the test mobile phone 336 and the mobile phone 338, such that the automated testing tool 340 is operable to receive information from the CAN bus 120. In particular, the hands-free ECU 102 may be communicatively coupled to the mobile phone 338, for example, via a wireless connection such as Bluetooth connection in the I/O interfaces 218. In this regard, the hands-free ECU 102 under test may be operable to control operation of the mobile phone 338 via the wireless connection based on (e.g. in response to) simulated test voice commands received from the automated testing tool 340 via the microphone 312. The hands-free ECU 102 may be operable to signal the mobile phone 338 to initiate a phone call or send a message to a specified phone number, based on (e.g. in response to) test voice commands. Moreover, in instances when the mobile phone 338 receives a phone call or message from another phone, such as the test phone 336, a simulated voice command may answer the call via the hands-free module.

The mobile phone 338 may communicate with the hands-free ECU 102 via an interface of the I/O interfaces 218. The hands-free ECU 102 may communicate screen ID changes to the display ECU 314 via the CAN bus 120 so that information from the mobile phone 338 may be displayed on the display screen 314. In this manner, any information that may be displayed on the mobile phone 338 may be displayed on the hands-free module display 314.

Also, action requests that may be input to the mobile phone such as making a call, playing audio and/or video or texting, for example, may be sent to the mobile phone 338 by inputting a voice command to the hands-free module via the microphone 312.

The test computer 350 is described with respect to Figure 4 and may be, for example, in one embodiment a general purpose computer, or in another embodiment a specially programmed piece of test equipment. The test computer 350 may be communicatively coupled with the speaker 310 or may comprise an integrated speaker 310 that may produce test voice commands that are picked-up by the microphone 312 to test the hands-free module ECU 102. The test computer 350 may be referred to as the computer system 350.

The test computer 350 may send and receive information to the hands-free ECU 102 via the CAN message simulator 330 and the CAN bus 120. The CAN bus message simulator 330 may be referred to as a CAN bus message converter, a CAN bus analyzer or a CAN bus message processor, for example. The test computer 350 may be communicatively coupled with the CAN message simulator 330 via any suitable interface and cable such as an Ethernet cable, USB cable or RS232, for example. Furthermore, any suitable CAN message simulator may be utilized in the test system 300. For example, a Vehicle Spy system from Intrepid Control Systems or a CANoe or a CANlyzer system from Vector may be utilized as the CAN message simulator 330; however, the system is not limited in this regard. Based on a command from the automated testing tool 340, the CAN message simulator 330 may simulate an activation signal to the hands-free ECU 102 that may enable a voice session and the automated voice testing. This may be similar to an in-vehicle system where, for example, a steering wheel may include a hands-free module activation button. When a user depresses the button, a hands-free system activation signal from the steering ECU 106 to the hands-free ECU 102 may be sent via the CAN bus 120 and the hands-free system may begin to accept voice commands and/or may enable voice reorganization in the hands-free ECU 102. The hands-free ECU 102 may send a change screen ID message via the CAN bus 120 to the display ECU 104 and the display screen 314 may be changed to indicate that the voice session is enabled. The sending of a change screen IDs from the hands-free module ECU 102 via the CAN bus 120 may be logged utilized to test operations of the hands-free module ECU 102.

The CAN message simulator 330 may also be operable to receive or trap communication transmitted over the CAN bus 120. In this regard, messages sent to and/or received by the hands-free ECU 102 over the CAN bus 120 may be captured, converted in format and/or analyzed by the CAN message simulator 330 and forwarded to the test computer 350 in a format appropriate format for the test computer 350 and/or the automated test system 340.

The test computer 350 may be operable to store and execute the automated voice based testing tool 340 to test operations of the hands-free module ECU 102 and CAN messages sent via the CAN bus 120. The automated voice based testing tool 340 may be developed in a Labwindows™/CVI development environment, for example. The automated voice based testing tool 340 may call one or more Microsoft speech application interfaces (API) and/or other API's to generate speech by a text to speech engine. The generated speech may be communicated from the test computer 350 via the speaker 310 to the microphone 312 and then to the audio port in the interface 218 of the hands-free ECU 102. The generated speech may be synthesized according to a specified language, a pronunciation of words and phrases and other features of speech such as emphasis and intonation or pitch. The generated speech may be consistent with an intended demographic which may use the hands-free module 102. These qualities of the speech may be indicated to the voice based testing tool 340 by text in a test input file.

The automated voice based testing tool 340 may simulate a voice session with the hands-free module ECU 102 by utilizing text input to generate a desired voice command. A text file, for example, a Microsoft Excel file may be utilized to input one or more of steps for testing the hands-free module ECU 102, input parameters such as words and phrases, expected output parameters such as CAN bus 120 messages and criteria for evaluating test results. The input parameters may include voice commands that may be communicated via one or more of the speaker 310, the microphone 312 and the CAN bus 120 to the hands-free ECU 102. After receiving the simulated voice commands, the hands-free ECU 102 may communicate with the display ECU 104 and/or the display 314 via the CAN bus 120 to perform an action indicated by the simulated voice command.

The test computer 350 and the hands-free module ECU 102 may be communicatively coupled via the test mobile phone 336 and the mobile phone 338. In particular, the test computer 350 maybe communicatively coupled with the test mobile phone 336. In some systems, the test computer 350 may communicate with the test mobile phone 336 via a USB port using AT commands or may use a wireless connection. The automated voice based testing tool 340 may be operable to automatically initiate a call by the test mobile phone 336 to the mobile phone 338 and may be operable to answer or receive calls in the test mobile phone 336 from the mobile phone 338. For example, the automated voice based testing tool 340 may send a simulated voice command via the speaker 310 and microphone 312 to the hands-free ECU 102 to initiate a phone call from the mobile phone 338 to the test mobile phone 336. The simulated voice command may be generated based on test input, e.g. as described above with regard to the test input read from the text file. The simulated voice command may trigger information (e.g. messages) from the ECU 102 via the CAN bus 120, which may change the display screen 314 to indicate that a call is being made to a specified phone number. This CAN bus 120 information (e.g. messages) maybe captured by the CAN message simulator 330 and may be sent to the automated voice based testing tool 340 in the test computer 350. The automated voice based testing tool 340 may communicate using AT commands with the test mobile phone 336 to answer the phone call and/or retrieve information that verifies that the phone call was successfully made from the mobile phone 338.

The automated voice based testing tool 340 may utilize AT commands to initiate a call or message from the test mobile phone 336 to the mobile phone 338 and, in some systems, may answer the call by sending a simulated voice message (e.g. command) via the speaker 310, the microphone 312 and the hands-free module ECU 102. The hands-free ECU 102 may communicate with the mobile phone 338 via, for example, a Bluetooth connection to answer the call based on the voice command. The hands-free ECU 102 may communicate with the display ECU 104 and/or the display screen 314 via the CAN bus 120 so that the screen 314 may display the incoming call and/or the progression of the phone call. The CAN bus messages may be captured by the CAN message simulator 330 and reported to the automated voice based testing tool 340 which may determine success or failure of the call. The automated voice based testing tool 340 may also utilize communication to and/or from the test phone 336 to determine success and/or failure of communication between the test mobile phone 336 and the mobile phone 338. Communicatively coupling the test computer 350 and the hands free ECU 102 via the test mobile phone 336 and the mobile phone 338 as described above may provide a particularly simple and efficient way to pass simulated voice commands from the automated testing tool 340 to the hands-free ECU 102.

The automated voice based testing tool 340 may generate test results data in the test results and log output file 344. The test results may be based on messages communicated over the CAN bus 120 as a result of the simulated voice command and captured by the CAN message simulator 330. In this regard, the CAN message simulator 330 may capture the messages communicated by the hands-free ECU 102 via the CAN bus 120 and may process and/or forward the messages to the test computer 350. The automated voice based testing tool 340 may utilize the CAN bus 120 messages to validate that the simulated voice commands have been successfully recognized by the hands-free module ECU 102. For example, the automated voice based testing tool 340 may extract a screen ID that was captured by the CAN message simulator 330, and compare it to an expected screen ID based on information received in a test input file 342 and/or a corresponding simulated voice command.

An exemplary test result and log output file 344 may comprise a Microsoft Excel file. The test result and log output file 344 may include an input parameter, an expected output parameter, an observed parameter, a verdict such as test pass or fail information and/or remarks. Moreover, the test result and log output file 344 may include detailed logs of the simulated voice commands communicated to the hands-free ECU 102, CAN message traffic captured by the CAN message simulator 330 and/or debugger logs.

In operation, the automated voice based testing tool 340 may automate steps to test the hands-free module ECU 102. Test steps and input parameters may be entered into an Excel test input file. The automated voice based testing tool 340 may be operable to automatically read the test input file and execute the test steps using the input parameters. The automated voice based testing tool 340 may send a message to the CAN message simulator 330 to activate a voice session with a hands-free module ECU 102 via the CAN bus 120. Simulated voice commands which may be of a specified language, a specified accent or pronunciation, a specified rate and/or a specified volume may be communicated from the test PC 350 to the hands-free ECU 102 via the speaker 310 and the microphone 312 by the automated voice based testing tool 340. The hands-free module ECU 102 may understand the simulated audible voice commands and may communicate a screen change message to the display ECU 104 over the CAN bus 120 based on the command. Once the display 314 performs an action on the display screen, for example, displaying a new radio channel, the display ECU 104 may send a CAN message to the hands-free ECU 102 to indicate which screen ID corresponds to (e.g. matches) the displayed image. The automated voice based testing tool 340 may receive, parse, analyze and/or verify the CAN messages for the screen changes sent via the CAN message simulator 330. The automated voice based testing tool 340 may be operable to simulate mobile phone calls and/or messages by placing and/or receiving phone calls or messages using voice commands to the hands-free ECU 102 and placing and/or receiving phone calls using AT commands to the test mobile phone 336. The automated voice based testing tool 340 may automatically generate a test report that indicates success and/or failure of the hands-free ECU 102 operations based on the captured CAN bus messages and communication with the test phone 336.

Figure 4 is a block diagram of a computer system that may host the automated voice based testing tool described with respect to Figures 1, 2 and 3. The computer system 350 may comprise automated voice based testing tool 340 logic, which, when executed, may cause the computer system 350 to perform any of the logic and/or steps disclosed herein. The computer system 350 may operate as a standalone device or may be connected, for example, using a network or other connection, to other computer systems or peripheral devices. The automated voice based testing tool 340 may be implemented through hardware, software or firmware, or any combination thereof. Alternative software implementations may include, but are not limited to, distributed processing or component/object distributed processing, parallel processing, or virtual machine processing may also be constructed to implement the tools described herein.

In a networked deployment, the computer system 350 may operate in the capacity of a server or as a client user computer in a server-client user network environment, or as a peer computer system in a peer-to-peer (or distributed) network environment. The computer system 350 may also be implemented as or incorporated into various devices, such as a personal computer (PC), a tablet PC, a set-top box (STB), a personal digital assistant (PDA), a mobile device, a palmtop computer, a laptop computer, a desktop computer, a communications device, or any other machine capable of executing the automated voice based testing tool logic that specifies actions to be taken by that machine. The computer system 350 may comprise electronic devices that provide voice, video or data communication. The system implementation may be a single computer system 350, or may include any collection of systems or sub-systems that individually or jointly execute a set, or multiple sets, of instructions to perform any of the processing for the automated voice based testing tool 340 and communications noted above.

The computer system 350 may include a processor 402, for example, a central processing unit (CPU), a graphics processing unit (GPU), or both. A processor may be implemented as a controller, microprocessor, digital signal processor, microcontroller, application specific integrated circuit (ASIC), discrete logic, or a combination of other types of circuits or logic. Moreover, the computer system 350 may include a memory 404 that can communicate via a bus 408. The memory 404 may be a main memory, a static memory, or a dynamic memory. The memory 404 may include, but may not be limited to internal and/or external computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one case, the memory 404 may include a cache or random access memory for the processor 402. Alternatively or in addition, the memory 404 may be separate from the processor 402, such as a cache memory of a processor, the system memory, or other memory.

The computer system 350 may further include a display 410, such as a liquid crystal display (LCD), an organic light emitting diode (OLED), a flat panel display, a solid state display, or a cathode ray tube (CRT). Additionally, the computer system 350 may include an input device 412, such as a keyboard and/or a cursor control device such as a mouse or any other suitable input device. The computer system 350 may also include a disk drive unit 406, a signal generation device 416, such as a speaker or remote control, and a one or more interfaces devices 414. The one or more interface devices 414 may include any suitable type of interface for wireless, wire line or optical communication between the computer system 350 and another device or network. For example, the computer system 350 may be communicatively coupled with the mobile phone 336, the CAN message simulator 330, the speaker 310 and/or a network via the one or more interface devices 414.

The disk drive unit 406 may include a computer-readable medium 422 in which one or more sets of instructions 424, for example, software, may be embedded. Further, the instructions 424 may embody one or more of the methods and/or logic as described herein for the automated voice based testing tool 340. In a particular embodiment, the instructions 424 may reside completely, or at least partially, within the main memory or static memory 404, and/or within the processor 402 during execution by the computer system 350. The memory 404 and/or the processor 402 also may include computer-readable media.

In general, the automated voice based testing tool 340 logic and processing described above may be encoded and/or stored in a machine-readable or computer-readable medium such as a compact disc read only memory (CDROM), magnetic or optical disk, flash memory, random access memory (RAM) or read only memory (ROM), erasable programmable read only memory (EPROM) or other machine-readable medium as, for examples, instructions for execution by a processor, controller, or other processing device. The medium may be implemented as any device or tangible component that contains, stores, communicates, propagates, or transports executable instructions for use by or in connection with an instruction executable system, apparatus, or device. Alternatively or additionally, the logic may be implemented as analog or digital logic using hardware, such as one or more integrated circuits, or one or more processors executing instructions that perform the processing described above, or in software in an application programming interface (API) or in a Dynamic Link Library (DLL), functions available in a shared memory or defined as local or remote procedure calls, or as a combination of hardware and software.

The system may include additional or different logic and may be implemented in many different ways. Memories may be Dynamic Random Access Memory (DRAM), Static Random Access Memory (SRAM), Flash, or other types of memory. Parameters (e.g., conditions and thresholds) and other data structures may be separately stored and managed, may be incorporated into a single memory or database, or may be logically and physically organized in many different ways. Programs and instructions may be parts of a single program, separate programs, implemented in libraries such as Dynamic Link Libraries (DLLs), or distributed across several memories, processors, cards, and systems.

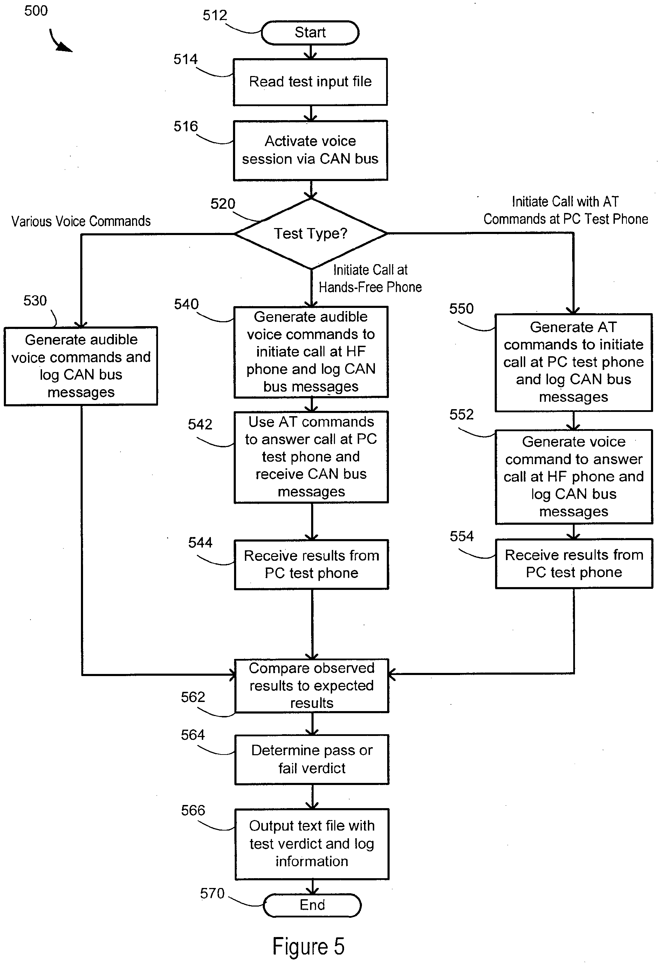

Figure 5 is a flow chart representing exemplary steps for testing a hands-free voice module using a voice based automated testing tool according to an embodiment of the invention. Referring to Figure 5, the exemplary steps may begin at start step 512. In step 514, the automated voice based testing tool 340 (see Fig. 3) may read the test plan and parameters input file 342. In step 516, the automated voice testing tool 340 may send a command and/or one or more parameters via the CAN message simulator 330 and the CAN bus 120 to the hands-free module ECU 102 to activate a voice session.

In step 520, the automated voice based testing tool 340 may initiate several test modes, such as audible voice commands, and calls to or from a mobile phone. In instances when the automated voice based testing tool 340 tests various voice commands, such as, but not limited to, for example, "play radio," "call 911," "find Route 5" or "turn-on lights," the exemplary steps may proceed to step 530. In step 530, the automated voice based testing tool 340 may generate an audible command via the speaker 310 to the microphone 312 and the hands-free module ECU 102. The automated voice based testing tool 340 may log CAN bus information corresponding to operations of the hands-free module ECU 102. For example, the automated voice based testing tool 340 may log one or more corresponding CAN bus messages. The corresponding CAN bus messages may be generated by the hands-free module ECU 102 as a result of receiving a command and may be sent to the test computer 350 via the CAN message simulator 330. In some embodiments, the CAN message simulator may create a log file and may forward the log file to the test computer 350.

In step 562, the automated voice based testing tool 340 may compare observed values from the received CAN bus information (e.g. CAN bus messages) or from the test phone 336, to expected values read from the test plan and parameters file 342. In step 564, the automated voice based testing tool 340 may determine whether the hands-free module ECU 102 generated appropriate CAN bus messages relative to commands that were generated by the automated voice based testing tool 340 and may determine verdict information corresponding to testing operations of the hands-free module ECU 102. In particular, the automated voice based testing tool 340 may determine one or more test pass or fail verdicts (e.g. whether one or more tests were passed or failed, or whether all of the tests were passed or failed). In step 566, the automated voice based testing tool 340 may write the one or more test pass or fail verdicts and/or the logged CAN bus messages to the test results and logs output file 344. The exemplary steps may end at step 570.

In step 520, in instances when the automated voice based testing tool 340 initiates a call in the mobile phone 338 to the test phone 336, the exemplary steps may proceed to step 540. In step 540 the automated voice based testing tool 340 may generate an audible voice command via the speaker 310 to the microphone 312 and hands-free module ECU 102 to make a phone call or send a message to the test phone 336. The voice command may include a phone number or recipient name, for example. The automated voice based testing tool 340 may log one or more corresponding CAN bus messages that may be generated by the hands-free module ECU 102 and received via the CAN message simulator 330 as a result of the voice command. In step 542, in some systems, the automated voice based testing tool 340 may communicate with the test phone 336 utilizing AT commands and may instruct the test phone 336 to answer the incoming call from the mobile phone 338. The automated voice based testing tool 340 may receive and log CAN bus messages as a result of answering the phone call. In step 544, the automated voice based testing tool 340 may receive information from the test phone 336 as a result receiving and/or answering the call. The exemplary steps may proceed to step 562.

In step 520, in instances when the automated voice based testing tool 340 initiates a call in the test phone 336 to the mobile phone 338, the exemplary steps may proceed to step 550. In step 550, the automated voice based testing tool 340 may send an AT command to the test phone 336 to make a phone call or send a message to the hands-free mobile phone 338. The automated voice based testing tool 340 may log one or more corresponding CAN bus messages that may be generated by the hands-free module ECU 102 and received via the CAN message simulator 330 as a result of the phone call received at the hands free mobile phone 338. In step 552, in some systems, the automated voice based testing tool 340 may generate an audible voice command to answer the incoming call at the mobile phone 338. The automated voice based testing tool 340 may receive and log CAN bus messages as a result of the voice command to answer the phone call. In step 554, the automated voice based testing tool 340 may receive information from the test phone 336 as a result of initiating the phone call and/or as a result of the phone call being answered by the mobile phone 338. The exemplary steps may proceed to step 562.

While various embodiments of the invention have been described, it will be apparent to those of ordinary skill in the art that many more embodiments and implementations are possible within the scope of the invention. Accordingly, the invention is not to be restricted except in light of the attached claims.

## Claims

1. A method for testing a hands-free device (102), the method comprising:
in an automated testing tool (340) hosted by a first device (350):
reading test input from text in an input file, for testing operations of said hands-free device (102), wherein said hands-free device (102) is communicatively coupled to a control area network (CAN) bus (120);
generating one or more simulated audible voice commands for said testing operations of said hands-free device (102), based on said read test input;
receiving by said automated testing tool (340), information from said CAN bus (120), wherein said CAN bus (120) information corresponds to said operations of said hands-free device (102) responsive to the generated simulated audible voice commands; and
outputting by said automated testing tool (340), text in an output file comprising one or both of:
verdict information corresponding to said testing said operations of said hands-free device (102); and
all or a portion of said information received from said CAN bus (120).

2. The method of claim 1, wherein said text in said test input file indicates said one or more simulated audible voice commands and one or more expected responses by said hands-free device (102)
wherein said one or more simulated audible voice commands for said testing operations of said hands-free device (102) may be generated by said automated testing tool (340) based on text to speech logic and may comprise one or more of a specified:
language;
pronunciation;
regional accent;
volume;
pitch; and
speed.

3. The method of claim 1 or 2, further comprising, in said automated testing tool (340), comparing expected responses from said text in said read test input file to said information received from said CAN bus (120) to determine said verdict information.

4. The method of any one of the preceding claims, wherein said first device (350) and said hands-free device (102) are communicatively coupled via a first mobile phone (336) and a second mobile phone (338) and said automated testing tool (340) is operable to receive said information from said CAN bus (120) corresponding to:
a call initiated in said first mobile phone (336) to said second mobile phone (338) by said generated one or more simulated audible voice commands, or
a call initiated automatically by said automated testing tool (340) in said second mobile phone (338) to said first mobile phone (336) based on said read test input.

5. The method of any one of the preceding claims, wherein said generating one or more simulated audible voice commands comprises transmitting said simulated audible voice commands from said first device (350) via a speaker positioned to be sensed by a microphone communicatively coupled to said hands-free device (102).

6. The method of any one of the preceding claims, wherein said hands-free device (102) comprises an electronic control unit (ECU) for a vehicle and said operations of said hands-free device (102) includes communicating messages onto said CAN bus (120) after one or more of:
receiving an audible voice command;
reorganizing said voice command;
comparing said voice command to a programmed grammar;
receiving a command via a wireless interface;
receiving a command via an optical interface; and
receiving a command via a wire line interface.

7. The method of any one of the preceding claims, wherein said first device (350) and said hands free device (102) are communicatively coupled by a control area network (CAN) message processor, and wherein said automated testing tool (340) is operable to, one or both of:
enable audible voice command operations in said hands-free device (102) by transmitting a command to said hands-free device (102) via said CAN message processor; and
receive said CAN bus (120) information from said hands-free device (102) via said CAN message processor.

8. A system for testing a hands-free device (102), the system comprising one or more circuits or processors in a first device (350), said one or more circuits or processors being operable to:
in an automated testing tool (340) hosted by said first device (350):
read test input from text in an input file, for testing operations of a hands-free device (102), wherein said hands-free device (102) is communicatively coupled to a control area network (CAN) bus (120);
generate one or more simulated audible voice commands, for said testing operations of said hands-free device (102), based on said read test input;
receive by said automated testing tool (340), information from said CAN bus (120), wherein said CAN bus information corresponds to said operations of said hands-free device (102) responsive to the generated simulated audible voice commands; and
output by said automated testing tool (340), text in an output file comprising one or both of:
verdict information corresponding to said testing said operations of said hands-free device (102); and
all or a portion of said information received from said CAN bus (120).

9. The system of claim 8, wherein said text in said test input file indicates said one or more simulated audible voice commands and one or more expected responses by said hands-free device (102)
wherein said one or more processors or circuits may be further operable to:
in said automated testing tool (340), compare expected responses from said text in said read test input file to said information received from said CAN bus (120) to determine said verdict information.

10. The system of claim 8 or 9, wherein said one or more simulated audible voice commands for said testing operations of said hands-free device (102) are generated by said automated testing tool (340) based on text to speech logic and comprise one or more of a specified:
language;
pronunciation;
regional accent;
volume;
pitch; and
speed.

11. The system of any one of claims 8 to 10, wherein said first device (350) and said hands-free device (102) are communicatively coupled via a first mobile phone (336) and a second mobile phone (338) and said automated testing tool (340) is operable to receive said information from said CAN bus (120) corresponding to:
a call initiated in said first mobile phone (336) to said second mobile phone (338) by said generated one or more simulated audible voice commands, or
a call initiated automatically by said automated testing tool (340) in said second mobile phone (338) to said first mobile phone (336) based on said read test input.

12. The system of any one of claims 8 to 11, wherein said generating one or more simulated audible voice commands comprises transmitting said simulated audible voice commands from said first device (350) via a speaker positioned to be sensed by a microphone communicatively coupled to said hands-free device (102).

13. The system of any one of claims 8 to 12, wherein said hands-free device (102) comprises an electronic control unit (ECU) for a vehicle and said operations of said hands-free device (102) includes communicating messages onto said CAN bus (120) after one or more of:
receiving an audible voice command;
reorganizing said voice command;
comparing said voice command to a programmed grammar;
receiving a command via a wireless interface;
receiving a command via an optical interface; and
receiving a command via a wire line interface.

14. The system of any one of claims 8 to 13, wherein said first device (350) and said hands free device (102) are communicatively coupled by a control area network (CAN) message processor, and wherein said automated testing tool (340) is operable to, one or both of:
enable audible voice command operations in said hands-free device (102) by transmitting a command to said hands-free device (102) via said CAN message processor; and
receive said CAN bus information from said hands-free device (102) via said CAN message processor.

15. A non-transitory computer readable medium having stored thereon one or more instructions for testing a hands-free device (102), said one or more instructions executable by one or more processors to cause the one or more processors to perform steps according to any one of claims 1 to 7.

## Patentansprüche

1. Verfahren zum Testen einer Freisprechvorrichtung (102), wobei das Verfahren umfasst:
in einem automatisierten Testwerkzeug (340), welches von einer ersten Vorrichtung (350) bereitgestellt wird:
Lesen von Test-Eingabe aus Text in einer Eingabedatei zum Testen von Operationen der Freisprechvorrichtung (102), wobei die Freisprechvorrichtung (102) kommunikativ mit einem CAN-Bus (120) gekoppelt ist;
Erzeugen eines oder mehrerer simulierter hörbarer Sprachbefehle für die Testoperationen der Freisprechanlage (102), basierend auf der gelesenen Test-Eingabe;
Empfangen, seitens des automatisierten Testwerkzeugs (340), von Informationen von dem CAN-Bus (120), wobei die Informationen des CAN-Busses (120) den Operationen der Freisprechvorrichtung (102) als Reaktion auf die erzeugten simulierten hörbaren Sprachbefehle entsprechen; und
Ausgeben, seitens des automatisierten Testwerkzeugs (340), von Text in einer Ausgabedatei, umfassend eines oder beides von:
Urteilsinformationen, welche dem Testen der Operationen der Freisprechvorrichtung (102) entsprechen; und
alle oder ein Teil der von dem CAN-Bus (120) empfangenen Informationen.

2. Verfahren nach Anspruch 1, wobei der Text in der Test-Eingabedatei den einen oder die mehreren simulierten hörbaren Sprachbefehle und eine oder mehrere erwartete Antworten von der Freisprechvorrichtung (102) anzeigt,
wobei der eine oder die mehreren simulierten hörbaren Sprachbefehle für die Testoperationen der Freisprechvorrichtung (102) durch das automatisierte Testwerkzeug (340) ausgehend von einer Text in Sprache-Logik erzeugt werden können und eines oder mehrere einer oder eines bestimmten:
Sprache;
Aussprache;
regionalen Akzents;
Lautstärke;
Höhe; und
Geschwindigkeit
enthalten kann.

3. Verfahren nach Anspruch 1 oder 2, ferner umfassend, in dem automatisierten Testwerkzeug (340), das Vergleichen von erwarteten Ergebnissen von dem Text in der gelesenen Test-Eingabedatei mit den von dem CAN-Bus (120) empfangenen Informationen zum Bestimmen der Urteilsinformationen.

4. Verfahren nach einem der vorhergehenden Ansprüche, wobei die erste Vorrichtung (350) und die Freisprechvorrichtung (102) kommunikativ über ein erstes Mobiltelefon (336) und ein zweites Mobiltelefon (338) gekoppelt sind und das automatisierte Testwerkzeug (340) so betätigbar ist, dass es die Informationen von dem CAN-Bus (120) empfängt, entsprechend:
einem Anruf, welcher in dem ersten Mobiltelefon (336) an das zweite Mobiltelefon (338) durch den oder die erzeugten einen oder mehreren simulierten hörbaren Sprachbefehle gestartet wurde, oder
einem Anruf, welcher automatisch durch das automatisierte Testwerkzeug (340) in dem zweiten Mobiltelefon (338) an das erste Mobiltelefon (336) ausgehend von der gelesenen Test-Eingabedatei gestartet wurde.

5. Verfahren nach einem der vorhergehenden Ansprüche, wobei das Erzeugen von einem oder mehreren simulierten hörbaren Sprachbefehle das Übertragen der simulierten hörbaren Sprachbefehle von der ersten Vorrichtung (350) über einen Lautsprecher umfasst, welcher so positioniert ist, dass er von einem Mikrofon erfasst wird, welches mit der Freisprechvorrichtung (102) kommunikativ gekoppelt ist.

6. Verfahren nach einem der vorhergehenden Ansprüche, wobei die Freisprechvorrichtung (102) eine elektronische Steuereinheit (ECU) für ein Fahrzeug umfasst und die Operationen der Freisprechvorrichtung (102) das Kommunizieren von Nachrichten auf den CAN-Bus (120) nach einer oder mehreren der folgenden Aktionen enthält:
Empfangen eines hörbaren Sprachbefehls;
Umstellen des Sprachbefehls;
Vergleichen des Sprachbefehls mit einer programmierten Grammatik;
Empfangen eines Befehls über eine Drahtlosschnittstelle;
Empfangen eines Befehls über eine optische Schnittstelle; und
Empfangen eines Befehls über eine Leitungsschnittstelle.

7. Verfahren nach einem der vorhergehenden Ansprüche, wobei die erste Vorrichtung (350) und die Freisprechvorrichtung (102) durch einen CAN-Nachrichtenprozessor kommunikativ gekoppelt sind und wobei das automatisierte Testwerkzeug (340) so betätigbar ist, dass es eine oder beide der folgenden Aktionen ausführt:
Ermöglichen von Operationen der hörbaren Sprachbefehle in der Freisprechvorrichtung (102) durch Übertragen eines Befehls an die Freisprechvorrichtung (102) über den CAN-Nachrichtenprozessor; und
Empfangen der Informationen des CAN-Busses (120) von der Freisprechvorrichtung (102) über den CAN-Nachrichtenprozessor.

8. System zum Testen einer Freisprechvorrichtung (102), wobei das System eine oder mehrere Schaltungen oder Prozessoren in einer ersten Vorrichtung (350) umfasst, wobei die eine oder mehreren Schaltungen oder Prozessoren betätigbar sind zum
in einem automatisierten Testwerkzeug (340), welches von einer ersten Vorrichtung (350) bereitgestellt wird:
Lesen von Test-Eingabe aus Text in einer Eingabedatei zum Testen von Operationen der Freisprechvorrichtung (102), wobei die Freisprechvorrichtung (102) kommunikativ mit einem CAN-Bus (120) gekoppelt ist;
Erzeugen eines oder mehrerer simulierter hörbarer Sprachbefehle für die Testoperationen der Freisprechanlage (102) basierend auf der gelesenen Test-Eingabe;
Empfangen, seitens des automatisierten Testwerkzeugs (340), von Informationen von dem CAN-Bus (120), wobei die Informationen des CAN-Busses (120) den Operationen der Freisprechvorrichtung (102) als Reaktion auf die erzeugten simulierten hörbaren Sprachbefehle entsprechen; und
Ausgeben, seitens des automatisierten Testwerkzeugs (340), von Text in einer Ausgabedatei, umfassend eines oder beides von:
Urteilsinformationen, welche dem Testen der Operationen der Freisprechvorrichtung (102) entsprechen; und
alle oder ein Teil der von dem CAN-Bus (120) empfangenen Informationen.

9. System nach Anspruch 8, wobei der Text in der Test-Eingabedatei den einen oder die mehreren simulierten hörbaren Sprachbefehle und eine oder mehrere erwartete Antworten von der Freisprechvorrichtung (102) anzeigt,
wobei die ein oder mehreren Prozessoren oder Schaltungen ferner betätigbar sein können zum:
Vergleichen, in dem automatisierten Testwerkzeug (340), von erwarteten Ergebnissen von dem Text in der gelesenen Test-Eingabedatei mit den von dem CAN-Bus (120) empfangenen Informationen zum Bestimmen der Urteilsinformationen.

10. System nach Anspruch 8 oder 9, wobei der eine oder die mehreren simulierten hörbaren Sprachbefehle für die Testoperationen der Freisprechvorrichtung (102) durch das automatisierte Testwerkzeug (340) ausgehend von Text in Sprache-Logik erzeugt werden können und eines oder mehrere einer oder eines bestimmten:
Sprache;
Aussprache;
regionalen Akzents;
Lautstärke;
Höhe; und
Geschwindigkeit
enthalten kann.

11. System nach einem der Ansprüche 8 bis 10, wobei die erste Vorrichtung (350) und die Freisprechvorrichtung (102) kommunikativ über ein erstes Mobiltelefon (336) und ein zweites Mobiltelefon (338) gekoppelt sind und das automatisierte Testwerkzeug (340) so betätigbar ist, dass es die Informationen von dem CAN-Bus (120) empfängt, entsprechend:
einem Anruf, welcher in dem ersten Mobiltelefon (336) an das zweite Mobiltelefon (338) durch den oder die erzeugten einen oder mehreren simulierten hörbaren Sprachbefehle gestartet wurde, oder
einem Anruf, welcher automatisch durch das automatisierte Testwerkzeug (340 in dem zweiten Mobiltelefon (338) an das erste Mobiltelefon (336) ausgehend von der gelesenen Test-Eingabedatei gestartet wurde.

12. System nach einem der Ansprüche 8 bis 11, wobei das Erzeugen von einem oder mehreren simulierten hörbaren Sprachbefehle das Übertragen der simulierten hörbaren Sprachbefehle von der ersten Vorrichtung (350) über einen Lautsprecher umfasst, welcher so positioniert ist, dass er von einem Mikrofon erfasst wird, welches mit der Freisprechvorrichtung (102) kommunikativ gekoppelt ist.

13. System nach einem der Ansprüche 8 bis 12, wobei Freisprechvorrichtung (102) eine elektronische Steuereinheit (ECU) für ein Fahrzeug umfasst und die Operationen der Freisprechvorrichtung (102) das Kommunizieren von Nachrichten auf den CAN-Bus (120) nach einer oder mehreren der folgenden Aktionen enthält:
Empfangen eines hörbaren Sprachbefehls;
Umstellen des Sprachbefehls;
Vergleichen des Sprachbefehls mit einer programmierten Grammatik;
Empfangen eines Befehls über eine Drahtlosschnittstelle;
Empfangen eines Befehls über eine optische Schnittstelle; und
Empfangen eines Befehls über eine Leitungsschnittstelle.

14. System nach einem oder mehreren der Ansprüche 8 bis 13, wobei die erste Vorrichtung (350) und die Freisprechvorrichtung (102) durch einen CAN-Nachrichtenprozessor kommunikativ gekoppelt sind und wobei das automatisierte Testwerkzeug (340) so betätigbar ist, dass es eine oder beide der folgenden Aktionen ausführt:
Ermögliche von Operationen der hörbaren Sprachbefehle in der Freisprechvorrichtung (102) durch Übertragen eines Befehls an die Freisprechvorrichtung (102) über den CAN-Nachrichtenprozessor; und
Empfangen der Informationen des CAN-Busses (120) von der Freisprechvorrichtung (102) über den CAN-Nachrichtenprozessor.

15. Nicht-flüchtiges computerlesbares Medium, auf dem ein oder mehrere Befehle zum Testen einer Freisprechvorrichtung (102) gespeichert sind, wobei die ein oder mehreren Befehle durch einen oder mehrere Prozessoren ausführbar sind, um die ein mehreren Prozessoren zum Ausführen von Schritten nach einem der Ansprüche 1 bis 7 zu veranlassen.

## Revendications

1. Procédé de test d'un dispositif mains libres (102), le procédé comprenant :
dans un outil de test automatisé (340) hébergé par un premier dispositif (350) :
lire une entrée de test provenant d'un texte dans un fichier d'entrée pour des opérations de test dudit dispositif mains libres (102), dans lequel ledit dispositif mains libres (102) est couplé de manière communicative à un bus CAN (120) ;
générer une ou plusieurs commandes vocales audibles simulées pour lesdites opérations de test dudit dispositif mains libres (102) en fonction de ladite entrée de test lue ;
recevoir par ledit outil de test automatisé (340) des informations provenant dudit bus CAN (120), dans lequel lesdites informations du bus CAN (120) correspondent auxdites opérations dudit dispositif mains libres (102) réactif aux commandes vocales audibles simulées générées ; et
émettre par ledit outil de test automatisé (340) du texte dans un fichier de sortie comprenant un élément ou les deux parmi :
des informations de verdict correspondant audit test desdites opérations dudit dispositif mains libres (102) ; et
l'ensemble ou une portion desdites informations reçues dudit bus CAN (120).

2. Procédé selon la revendication 1, dans lequel ledit texte dans ledit fichier d'entrée de test indique lesdites une ou plusieurs commandes vocales audibles simulées et une ou plusieurs réponses attendues par ledit dispositif mains libres (102),
dans lequel lesdites une ou plusieurs commandes vocales audibles simulées pour lesdites opérations de test dudit dispositif mains libres (102) peuvent être générées par ledit outil de test automatisé (340) en fonction d'une logique de conversion texte-parole et peuvent comprendre un ou plusieurs éléments parmi :
un langage ;
une prononciation ;
un accent régional ;
un volume ;
une hauteur ; et
une vitesse spécifié(e).

3. Procédé selon la revendication 1 ou 2, comprenant en outre, dans ledit outil de test automatisé (340), comparer des réponses attendues provenant dudit texte dans ledit fichier d'entrée de test lu auxdites informations reçues dudit bus CAN (120) pour déterminer lesdites informations de verdict.

4. Procédé selon l'une quelconque des revendications précédentes, dans lequel ledit premier dispositif (350) et ledit dispositif mains libres (102) sont couplés de manière communicative par le biais d'un premier téléphone mobile (336) et d'un second téléphone mobile (338), et ledit outil de test automatisé (340) peut opérer pour recevoir lesdites informations dudit bus CAN (120) correspondant à :
un appel initié dans ledit premier téléphone mobile (336) audit second téléphone mobile (338) par lesdites une ou plusieurs commandes vocales audibles simulées générées, ou
un appel initié automatiquement par ledit outil de test automatisé (340) dans ledit second téléphone mobile (338) audit premier téléphone mobile (336) en fonction de ladite entrée de test lue.

5. Procédé selon l'une quelconque des revendications précédentes, dans lequel ladite génération d'une ou plusieurs commandes vocales audibles simulées comprend transmettre lesdites commandes vocales audibles simulées dudit premier dispositif (350) par le biais d'un haut-parleur positionné pour être détecté par un microphone couplé de manière communicative audit dispositif mains libres (102).

6. Procédé selon l'une quelconque des revendications précédentes, dans lequel ledit dispositif mains libres (102) comprend un bloc de commande électronique (ECU) pour un véhicule et lesdites opérations dudit dispositif mains libres (102) incluent communiquer des messages sur ledit bus CAN (120) après une ou plusieurs actions parmi :
recevoir une commande vocale audible ;
réorganiser ladite commande vocale ;
comparer ladite commande vocale à une grammaire programmée ;
recevoir une commande par le biais d'une interface sans fil ;
recevoir une commande par le biais d'une interface optique ; et
recevoir une commande par le biais d'une interface filaire.

7. Procédé selon l'une quelconque des revendications précédentes, dans lequel ledit premier dispositif (350) et ledit dispositif mains libres (102) sont couplés de manière communicative par un processeur de message CAN, et dans lequel ledit outil de test automatisé (340) peut opérer pour, une action ou les deux parmi :
autoriser des opérations à commande vocale audible dans ledit dispositif mains libres (102) en transmettant une commande audit dispositif mains libres (102) par le biais dudit processeur de message CAN ; et
recevoir lesdites informations du bus CAN (120) dudit dispositif mains libres (102) par le biais dudit processeur de message CAN.

8. Système de test d'un dispositif mains libres (102), le système comprenant un ou plusieurs circuits ou processeurs dans un premier dispositif (350), lesdits un ou plusieurs circuits ou processeurs pouvant opérer pour :
dans un outil de test automatisé (340) hébergé par ledit premier dispositif (350) :
lire une entrée de test provenant d'un texte dans un fichier d'entrée pour des opérations de test d'un dispositif mains libres (102), dans lequel ledit dispositif mains libres (102) est couplé de manière communicative à un bus CAN (120) ;
générer une ou plusieurs commandes vocales audibles simulées pour lesdites opérations de test dudit dispositif mains libres (102) en fonction de ladite entrée de test lue ;
recevoir par ledit outil de test automatisé (340) des informations provenant dudit bus CAN (120), dans lequel lesdites informations du bus CAN (120) correspondent auxdites opérations dudit dispositif mains libres (102) réactif aux commandes vocales audibles simulées générées ; et
émettre par ledit outil de test automatisé (340) du texte dans un fichier de sortie comprenant un élément ou les deux parmi :
des informations de verdict correspondant audit test desdites opérations dudit dispositif mains libres (102) ; et
l'ensemble ou une portion desdites informations reçues dudit bus CAN (120).

9. Système selon la revendication 8, dans lequel ledit texte dans ledit fichier d'entrée de test indique lesdites une ou plusieurs commandes vocales audibles simulées et une ou plusieurs réponses attendues par ledit dispositif mains libres (102),
dans lequel lesdits un ou plusieurs processeurs ou circuits peuvent en outre opérer pour :
dans ledit outil de test automatisé (340), comparer des réponses attendues provenant dudit texte dans ledit fichier d'entrée de test lu auxdites informations reçues dudit bus CAN (120) pour déterminer lesdites informations de verdict.

10. Système selon la revendication 8 ou 9, dans lequel lesdites une ou plusieurs commandes vocales audibles simulées pour lesdites opérations de test dudit dispositif mains libres (102) sont générées par ledit outil de test automatisé (340) en fonction d'une logique de conversion texte-parole et comprennent un ou plusieurs éléments parmi :
un langage ;
une prononciation ;
un accent régional ;
un volume ;
une hauteur ; et
une vitesse spécifié(e).

11. Système selon l'une quelconque des revendications 8 à 10, dans lequel ledit premier dispositif (350) et ledit dispositif mains libres (102) sont couplés de manière communicative par le biais d'un premier téléphone mobile (336) et d'un second téléphone mobile (338), et ledit outil de test automatisé (340) peut opérer pour recevoir lesdites informations dudit bus CAN (120) correspondant à :
un appel initié dans ledit premier téléphone mobile (336) audit second téléphone mobile (338) par lesdites une ou plusieurs commandes vocales audibles simulées générées, ou
un appel initié automatiquement par ledit outil de test automatisé (340) dans ledit second téléphone mobile (338) audit premier téléphone mobile (336) en fonction de ladite entrée de test lue.

12. Système selon l'une quelconque des revendications 8 à 11, dans lequel ladite génération d'une ou plusieurs commandes vocales audibles simulées comprend transmettre lesdites commandes vocales audibles simulées dudit premier dispositif (350) par le biais d'un haut-parleur positionné pour être détecté par un microphone couplé de manière communicative audit dispositif mains libres (102).

13. Système selon l'une quelconque des revendications 8 à 12, dans lequel ledit dispositif mains libres (102) comprend un bloc de commande électronique (ECU) pour un véhicule et lesdites opérations dudit dispositif mains libres (102) incluent communiquer des messages sur ledit bus CAN (120) après une ou plusieurs actions parmi :
recevoir une commande vocale audible ;
réorganiser ladite commande vocale ;
comparer ladite commande vocale à une grammaire programmée ;
recevoir une commande par le biais d'une interface sans fil ;
recevoir une commande par le biais d'une interface optique ; et
recevoir une commande par le biais d'une interface filaire.

14. Système selon l'une quelconque des revendications 8 à 13, dans lequel ledit premier dispositif (350) et ledit dispositif mains libres (102) sont couplés de manière communicative par un processeur de message CAN, et dans lequel ledit outil de test automatisé (340) peut opérer pour, une action ou les deux parmi :
autoriser des opérations à commande vocale audible dans ledit dispositif mains libres (102) en transmettant une commande audit dispositif mains libres (102) par le biais dudit processeur de message CAN ; et
recevoir lesdites informations du bus CAN (120) dudit dispositif mains libres (102) par le biais dudit processeur de message CAN:

15. Support non transitoire lisible par ordinateur ayant stocké sur lui une ou plusieurs instructions pour tester un dispositif mains libres (102), lesdites une ou plusieurs instructions pouvant être exécutées par un ou plusieurs processeurs pour amener le ou les processeurs à réaliser des étapes selon l'une quelconque des revendications 1 à 7.
